# EUROPÄISCHE PATENTANMELDUNG

(11) **EP 1 731 009 A1**
(43) Veröffentlichungstag der Anmeldung: **13.12.2006**
(21) Anmeldenummer: 06011819.7
(22) Anmeldetag: 08.06.2006
(51) Int. Cl.: A01B 3/42, A01B 3/421, A01B 3/46

(54) **Drehpflug mit Drucksteuereinheit**

(30) Priorität: 09.06.2005 DE 102005026490
(71) Anmelder: Lemken GmbH & Co. KG, 46519 Alpen (DE)
(72) Erfinder: Meurs, Wilhelm, 46519 Alpen (DE); Van den Boom, Marco, 46509 Xanten (DE)
(74) Vertreter: Schulte, Jörg

(57) **Zusammenfassung**

Gegenstand der Erfindung ist ein Drehpflug 1 mit Drehwerk 7, Einstellgetriebe 21, Pflugrahmen 20 und Stützrad 30, der über eine Vorrichtung 40 verfügt, die sowohl während der Pflugarbeit als auch während des Drehvorganges eine optimale Gewichtsübertragung des Pfluggewichtes auf den Traktor 50 sicherstellt. Die Übertragung des Gewichtes wird über eine Vorrichtung 40 mit Drucksteuereinheit 41 und eine elektronische Regelvorrichtung bestimmt.

## Beschreibung

Die Erfindung betrifft einen Drehpflug mit einem Pflugturm mit Anlenkpunkten für die Verbindung mit dem Dreipunktgestänge des Traktors, das aus Unterlenkern und einem als Hydraulikzylinder ausgebildeten Oberlenker besteht, mit einem Drehwerk mit Drehachse, an die mindestens ein Hydraulikzylinder angreift und mit einem spornenden Stützrad, das im hinteren Bereich des Drehpfluges mit dem Pflugrahmen und über einen torsionssteifen Stabilisator kardanisch mit dem Pflugturm verbunden ist. Außerdem betrifft die Erfindung ein Verfahren zum Betreiben eines Drehpfluges und eines Traktors, wobei während der Drehen des Pflugrahmens zusätzlich Gewicht vom Drehpflug auf den Traktor übertragen wird.

Bei derartigen aus der DE 29 35 442 A1 bekannten Drehpflügen wurde zwar während des Drehvorganges die Standsicherheit des Traktors auch bei solchen Drehpflügen in aufgesattelter Form deutlich erhöht, allerdings ohne während der Pflugarbeit zu wirken. Daher konnte sich die Technik nicht so durchsetzen, weil während der Pflugarbeit nicht genug Traktion zur Verfügung stand, da nicht genügend Gewicht vom Pflug auf die Hinterachse des Traktors übertragen werden konnte. Die am Traktor vorhandene Regelhydraulik war nicht in der Lage, eine ausreichende Verbesserung der Traktion zu erzielen. Im Übrigen war eine solche Gewichtsverlagerung während der Pflugarbeit auch gar nicht vorgesehen. Vielmehr hat man seinerzeit versucht, die bessere Traktion durch vielfurchige Anbaudrehpflüge insbesondere in sechs- und sieben-furchiger Form zu erreichen, die in Verbindung mit der Regelhydraulik des Traktors ausreichend Traktion erzielten. Allerdings sind diese Drehpflüge, von denen einer aus der DE 29 19 362 A1 bekannten Pflüge aufgrund des großen Schwerpunktabstandes während des Wendevorganges auf dem Vorgewende nur sehr schwer zu handhaben und auch nur mit sehr großen Traktoren, die einen großen Leistungsüberschuss haben und nur wegen des hohen Eigengewichtes und der hohen Hubkraft eingesetzt wurden. Solche Traktoren sind beträchtlich teurer als solche Traktoren, die vom eigentlichen Leistungsbedarf her nur erforderlich sind. Aufgrund der großen Länge des Pfluges musste insbesondere während der Pflugarbeit im hügeligen Gelände der Oberlenker in einem so genannten Langloch angebaut werden, um ein besseres Durchfahren von Senken möglich zu machen. In Verbindung mit der üblichen Regelhydraulik tritt gerade in dieser Situation hoher Schlupf auf, da in diesem Betriebszustand kein Gewicht des Pfluges auf den Traktor übertragen wird und somit der Traktor extrem an Traktion verliert.

Der Erfindung liegt daher die Aufgabe zugrunde, einen Drehpflug zu schaffen, der während der Pflugarbeit keine kritischen Betriebszustände zulässt und eine optimale Traktion des Traktors gewährleistet und sich dementsprechend verfahrensmäßig optimal verhält.

Die Aufgabe wird erfindungsgemäß dadurch gelöst, dass eine Vorrichtung mit Drucksteuereinheit vorgesehen ist, die so einstellbar ist, dass der Oberlenker auch während der Pflugarbeit mit einer vorwählbaren Zugkraft beaufschlagt ist, wodurch gezielt eine Gewichtsübertragung vom Drehpflug auf den Traktor erfolgt.

Dadurch, dass während der Pflugarbeit die Gewichtsbelastung auf das Stützrad reduziert wird, verbessert sich insbesondere auch in nassen und weichen Bodenverhältnissen die Tiefenführung des Pfluges, da das Stützrad nur geringfügig in den Boden einsinkt und keine tiefen Spurrillen hinterlässt. Zusätzlich bewirkt die Erhöhung der Gewichtsbelastung auf den Traktor die gewünschte erheblich bessere Traktion, die dazu führt, dass neben einer Erhöhung der Flächenleistung auch eine deutliche Einsparung von Treibstoff erreicht wird.

Nach einer zweckmäßigen Weiterbildung der Erfindung ist vorgesehen, dass die Vorrichtung mit Drucksteuereinheit mit einer Regelelektronik ausgerüstet ist. Über diese Regelelektronik ist die gewünschte kontinuierliche Regelung der Gewichtsübertragung auf den Traktor sicher durchzuführen.

Eine genaue Einstellung der Zugkraft erfolgt gemäß einer Weiterbildung dadurch, dass die Vorrichtung mit Drucksteuereinheit unabhängig von der Regelhydraulik des Traktors die Zugkraft regelnd ausgelegt ist. Sie stellt sicher, dass ohne Veränderung der Lage des Dreipunktgestänges des Traktors die Traktion und damit Zugkraft des Traktors verbessert werden kann, ohne dabei abhängig zu sein von der jeweiligen kinematischen Anordnung des Dreipunktgestänges selbst.

Der Oberlenker ist als Hydraulikzylinder ausgebildet, wobei diese Ausführung dadurch weitergebildet wird, dass die Vorrichtung mit Drucksteuereinheit einem als Hydraulikzylinder ausgebildeten Oberlenker zugeordnet ist, der permanent die Zugkraft anpassend geschaltet ist. Der Hydraulikzylinder ist mit der Drucksteuereinheit und der Regelelektronik derart in Verbindung geschaltet, dass er während der Pflugarbeit eine Zugkraft erzeugend und damit eine vorgebbare Gewichtsbelastung auf den Traktor und damit auch eine vorgebbare Entlastung des Stützrades sicherstellend ausgebildet ist. Der als Hydraulikzylinder ausgebildete Oberlenker erzeugt um die unteren Anlenkpunkte der Traktorunterlenker ein gleich bleibendes Drehmoment, das sowohl beim Durchfahren durch Senken als auch beim Überfahren von Hügeln annähernd konstant bleibt. Treten Betriebszustände auf, die zu einer veränderten Zugkraft des Hydraulikzylinders führen könnten, gibt der als Oberlenker eingesetzte Hydraulikzylinder unter Beibehaltung der voreingestellten Zugkraft nach bzw. passt sich in seiner Länge an. Die Gewichtsbelastung auf den Traktor bleibt dadurch gleich so wie auch die Entlastung des Stützrades. Dadurch, dass das Dreipunktgestänge des Traktors in der Höhenlage fixiert ist, wird die Führung des Pfluges deutlich verbessert. Während der Pflugarbeit, von der Seite betrachtet, passt sich der Pflug nicht mehr um den Schnittpunkt der Traktorunterlenker und des Oberlenkers der Bodenkontur an, sondern um den Drehpunkt, der durch die Anlenkpunkte der Unterlenker gebildet wird. Neben der Reduzierung der Bauteilkräfte wird dadurch auch eine gleichmäßigere Pflugarbeit erzielt. Zweckmäßig ist es, das Stützrad über einen torsionssteifen Stabilisator mit dem Pflugturm gelenkig und kardanisch zu verbinden. Durch diese Art der Verbindung des Stützrades mit dem Pflugturm wird das Stützrad immer in einer aufrechten Stellung gehalten. Dadurch kann auch auf den Einsatz eines durch die Schwerkraft umschwenkenden Pendelstützrades oder Schwenkstützrades verzichtet werden.

Gemäß der Erfindung ist weiter vorgesehen, dass die Vorrichtung mit Drucksteuereinheit während der Pflugrahmendrehung so schaltbar ausgebildet ist, dass eine Reduzierung der Gewichtsbelastung des Stützrades, eine Erhöhung der Gewichtsbelastung auf die Hinterachse des Traktors und eine Erhöhung der Standfestigkeit des Traktors eintritt. Für den Drehvorgang wird der Pflug zwar vorne über die Traktorhydraulik ausgehoben, das Stützrad behält aber Kontakt mit dem Boden. Es trägt soviel Gewichtskraft, das sicherstellt ist, dass die Vorderachse des Traktors immer mit ausreichend Restlast belastet ist und somit eine ausreichende Lenkbarkeit garantiert ist. Die Traktorhinterachse wird dabei zusätzlich mit Gewicht belastet, was insbesondere auch in Hanglagen die Standfestigkeit des Traktors wesentlich verbessert. Je nach Betriebsdruck im Hydraulikzylinder kann z. B. in Hanglagen die Traktorseite mit mehr Gewicht belastet werden, die üblicherweise während des Drehvorganges stärker entlastet wird. Einer Gefahr des Umkippens des Traktors, auch in starken Hanglagen, wird dadurch aktiv entgegengewirkt. Während des Drehvorganges neigt sich der Pflugturm nach vorne, was durch Einfahren des Hydraulikzylinders kompensiert wird. Der Hydraulikzylinder sorgt dabei unter Beibehaltung der Zugkraft für die Beibehaltung der Gewichtsübertragung auf den Traktor und für eine Anpassung an die kinematischen Veränderungen des Systems. Falls der Einstellbereich des Hydraulikzylinders nicht ausreicht, erfolgt ein zusätzlicher Ausgleich über ein hydraulisches Stellteil des Einstellgetriebes des Drehpfluges.

Vorteilhaft ist es gemäß der Erfindung auch, dass der Hydraulikzylinder über die Drucksteuereinheit und die Regelelektronik während der Pflugarbeit und der Pflugrahmendrehung permanent mit einem Betriebsdruck beaufschlagt ist, der für den jeweiligen Betriebszustand voreinstellbar ist. Die Gewichtsübertragung auf den Traktor bzw. die Entlastung des Stützrades kann so optimiert werden. Da es unwahrscheinlich ist, dass eine bestimmte Gewichtsbelastung auf die Hinterachse des Traktors, sowohl für eine optimale Traktion während der Pflugarbeit als auch für eine optimale Standfestigkeit während des Drehvorganges immer optimal ist, kann so für den jeweiligen Betriebszustand die optimale Zugbelastung des Hydraulikzylinders vorgegeben werden. Dadurch ist es auch möglich, den Pflugrahmen nebst Stützrad für den Drehvorgang vollständig auszuheben, falls die Hubkraft des Traktors dies zulässt und eine ausreichende Lenkbarkeit des Traktors bei vollständig ausgehobenem Pflug sichergestellt ist.

Besonders zweckmäßig ist es, wenn die Drucksteuereinheit eine Druckwaage und einen Steuerblock mit 4/3-Wegeventilen und vorzugsweise einer Eingangsplatte mit Anschlüssen für die Verbindung mit der Regelhydraulik des Traktors aufweist. Mit einer so ausgebildeten Drucksteuereinheit wird mit Hilfe der Regelelektronik die Vorrichtung so eingestellt, dass der Traktor immer mit einer optimierten Gewichtsbelastung eingesetzt werden kann. Die Versorgung der Drucksteuereinheit erfolgt beispielsweise über ein Load-Sensing Hydrauliksystem mit Lastrückmeldung. Die einzelnen Wegeventile sind beispielsweise als 4/3-Wegemagnetventile ausgebildet, die über die Regelelektronik vorzugsweise programmgesteuert geschaltet werden.

Die Aufgabe wird weiter durch ein Verfahren gelöst, bei dem auch während der Pflugarbeit Gewicht in einer vorgegebenen und variabel den Pflugbedingungen angepaßten Höhe vom Drehpflug auf den Traktor übertragen wird. Auf diese Weise erfolgt die gewünschte optimale Gewichtsbelastung des Traktors, so dass eine bessere Traktion erreicht wird. Dadurch und auch durch die bessere Tiefenführung des Pfluges insgesamt wird eine Erhöhung der Flächenleistung erreicht.

Die Erfindung sieht weiter vor, dass eine Vorrichtung mit Hydraulikzylinder und mit Drucksteuereinheit vorgesehen ist, die so einstellbar ist, dass der Oberlenker auch während der Pflugarbeit mit einer vorwählbaren Zugkraft beaufschlagt ist, wodurch gezielt eine Gewichtsübertragung vom Drehpflug auf den Traktor erfolgt.

Diese Ausführung ermöglicht es, einen üblichen Oberlenker einzusetzen. Die am Pflug angeordnete Vorrichtung mit Hydraulikzylinder verlagert den Anlenkpunkt für den Oberlenker am Pflugturm und erzeugt so die Zugkraft, die auf den Oberlenker wirkt. Denkbar ist auch, die Anlenkpunkte für die Unterlenker so zu verlagern, dass die entsprechende vorwählbare Zugkraft auf den Oberlenker wirkt.

Die Erfindung zeichnet sich somit insbesondere dadurch aus, dass die Traktion des Traktors wesentlich verbessert ist und dass unabhängig von der jeweiligen Arbeitsposition des Drehpfluges Traktor und Drehpflug immer eine Einheit sind, die sich gegenseitig unterstützen.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Fig. 1: eine Draufsicht auf einen Drehpflug in Arbeitsstellung,
- Fig. 2: eine Seitenansicht des Drehpfluges in halbgedrehter Stellung,
- Fig. 3: eine Draufsicht des Drehwerkes und des Einstellgetriebes in Arbeitsstellung und
- Fig. 4: eine Schemaskizze einer Drucksteuereinheit.

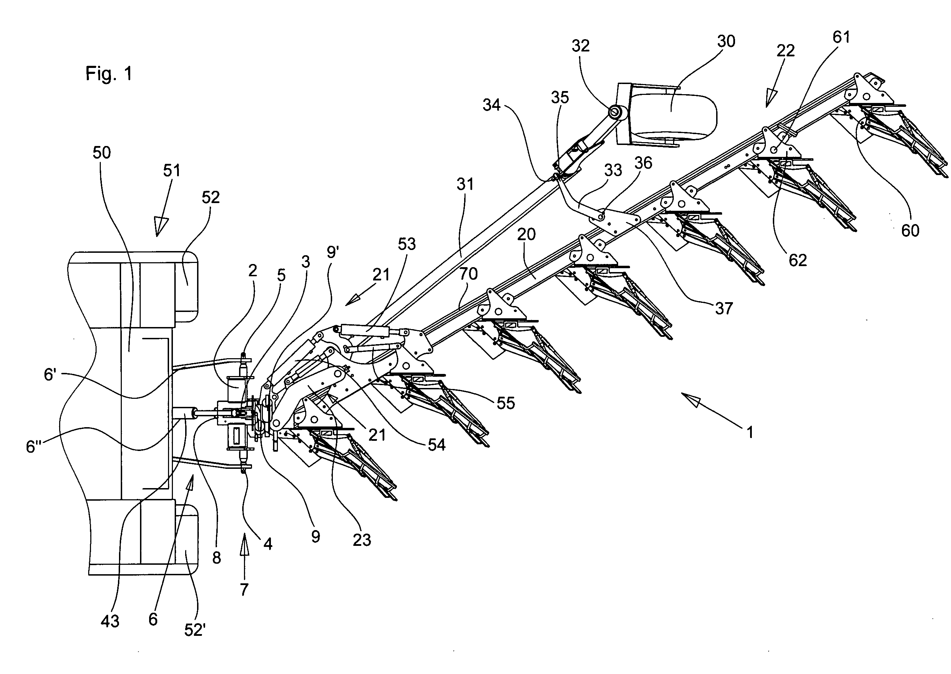

Figur 1 zeigt eine Draufsicht des Drehpfluges 1 in Arbeitsstellung. Der Drehpflug ist hier nur mit den rechts wendenden Pflugkörpern 60 dargestellt. Zur Vereinfachung sind die links wendenden Pflugkörper nicht dargestellt. Der Drehpflug 1 ist mit seinem Pflugturm 2 mit dem Dreipunktgestänge 6 des Traktors 50 über die Anlenkpunkte 3, 4, 5 verbunden. Als Oberlenker 6" ist hier ein Hydraulikzylinder 43 eingesetzt. Der Pflugturm 2 ist Bestandteil des Drehwerkes 7 mit der Drehachse 8. Hinten an der Drehachse 8 befindet sich das Einstellgetriebe 21 mit dem Traglenker 23, dem Stellzylinder 54 für die Vorderfurchenbreite und dem Verstellzylinder 53 für die Arbeitsbreitenverstellung.

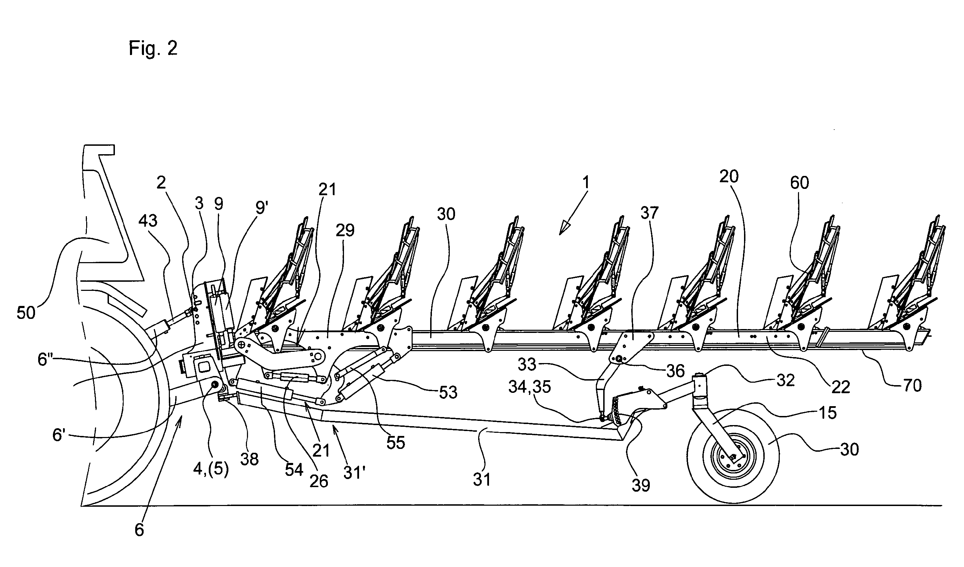

An die Drehachse 8 greifen die Drehzylinder 9 und 9' an, die für eine kraftschlüssige Drehung auch im Bereich der halbgedrehten Stellung des Pflugrahmens 20 sorgen. Über den zuvor genannten Hydraulikzylinder 43 wird ein Teil des Gewichtes des Drehpfluges 1 auf den Traktor 50 bzw. auf die Hinterachse 51 des Traktors 50 übertragen. Im hinteren Bereich 22 des Pflugrahmens 20 befindet sich das Stützrad 30, das spornend über die Spornachse 32 mit dem Stabilisator 31 verbunden ist. Der Stabilisator 31 ist vorne über ein Kreuzgelenk 38 mit dem Pflugturm 2 verbunden. Dies ist insbesondere der Fig. 2 zu entnehmen.

Der Pflugrahmen 20 weist die Radkonsole 37 mit Schwenkarm 33 auf. In Arbeitsstellung gesehen ist der Schwenkarm 33 um die lotrechte Achse 36 mit der Radkonsole 37 verbunden. Über das Kugelgelenk 35 und die Achse 34 ist das andere Ende des Schwenkarmes 33 mit dem Stabilisator 31 verbunden. Durch die gelenkige Anordnung des Schwenkarmes 33 können relative Verschiebungen zwischen Stützrad 30 und Pflugrahmen 20 während des Drehvorganges ausgeglichen werden. Die Pflugkörper 60 sind über die Konsolen 62 und die Lagerungen 61 mit dem Pflugrahmen 20 verbunden. Über die Verbindungsstange 70 können die einzelnen Pflugkörper 60 mit Hilfe des Verstellzylinders 53 und der Ansteuerstange 55 in ihrer Arbeitsbreite verändert werden.

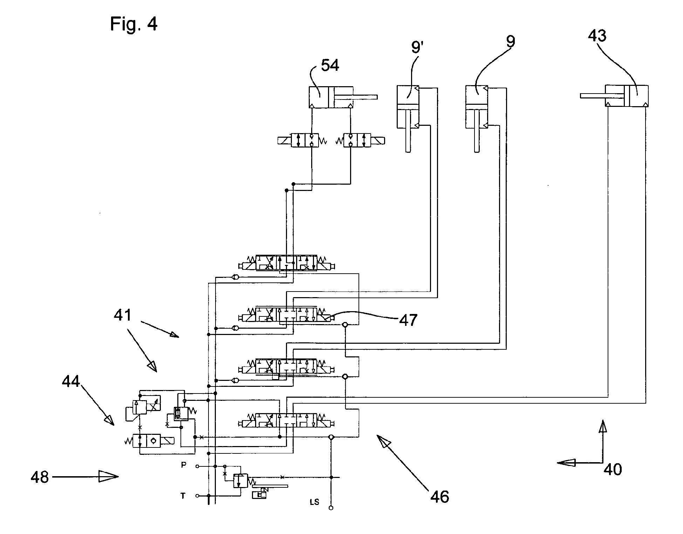

Über den Hydraulikzylinder 43, der hydraulisch auf Zug beansprucht wird, kann sowohl während der Pflugarbeit als auch während der Kehrfahrt auf dem Vorgewende Gewicht vom Drehpflug 1 auf den Traktor 50 übertragen werden. Abhängig von der ausgeübten Zugkraft wird die Hinterachse 51 des Traktors 50 mit mehr oder weniger Gewicht belastet. Während des Drehvorganges kann über die voreingestellte Zugkraft des Hydraulikzylinders 43 das Kippmoment auf den Traktor 50 vollkommen eliminiert werden. In der Arbeitsstellung gemäß Figur 1 würde bei ausgehobenem Drehpflug und bei maximaler Zugkraft des Hydraulikzylinders 43 ein rechtsdrehendes Kippmoment auf den Traktor 50 ausgeübt. Das Rad 52 würde sehr hoch belastet, das Rad 52' dagegen nur sehr gering. Wenn der Hydraulikzylinder 43 keine Zugkraft übernimmt, wird auf den Traktor 50 ein linksdrehendes Kippmoment ausgeübt. Über eine Vorrichtung 40 mit Drucksteuereinheit 41 und Regelelektronik wird die Zugkraft des Hydraulikzylinders 43 so eingestellt, dass im Idealfall sowohl das rechte Hinterrad 52 als auch das linke Hinterrad 52' des Traktors 50 mit dem gleichen Gewicht belastet werden. Eine schematische Darstellung der Vorrichtung 40 mit Drucksteuereinheit 41 ist Fig. 4 zu entnehmen.

Fig. 2 zeigt eine Seitenansicht des Drehpfluges 1, und zwar in halbgedrehter Stellung des Pflugrahmens 20. Die Fig. 2 verdeutlicht insbesondere die besondere Anordnung des Stützrades 30 und seine Verbindung mit dem Pflugrahmen 20 und auch Pflugturm 2. Das Stützrad 30 wird immer in einer aufrechten Stellung gehalten. Dafür sorgt der Stabilisator 31, der über das Kreuzgelenk 38 mit dem Pflugturm 2 verbunden ist. Der Stabilisator 31 weist hier einen Knick 31' auf, der für genügend Freiraum für das Drehen des Pflugrahmens 20 mit Einstellgetriebe 21 sorgt. Denkbar ist es auch, ein Stützrad 30 ohne Stabilisator 31 einzusetzen und über Hydraulikzylinder oder andere Stelleinrichtungen während des Drehvorganges permanent in einer aufrechten Stellung zu halten. Der Pflugrahmen 20 weist im hinteren Bereich 22 die Konsole 37 auf, mit der in halbgedrehter Stellung des Pflugrahmens 20 waagerecht und quer zur Fahrtrichtung angeordneten Achse. Der Schwenkarm 33 ist in Fahrt- bzw. Arbeitsrichtung schwenkbar über die Achse 36 mit der Konsole 37 verbunden und über das Kugelgelenk 35 und der Achse 34 mit der Stelleinrichtung 39 des Stabilisators 31. Vorne ist der Drehpflug über den Pflugturm 2 mit seinen Verbindungspunkten 3, 4, 5 mit dem Dreipunktgestänge 6 verbunden. Der Oberlenker 6" ist hier als Hydraulikzylinder 43 ausgebildet, der mit einer hier nicht dargestellten Drucksteuereinheit 41 hydraulisch in Verbindung steht. Die Unterlenker sind mit 6' bezeichnet.

Während des Drehvorganges übt der Hydraulikzylinder 43 soviel Zugkraft aus, dass das rechte Hinterrad 52 und das linke Hinterrad 52' des Traktors 50 mit annähernd dem gleichen Gewicht belastet werden.

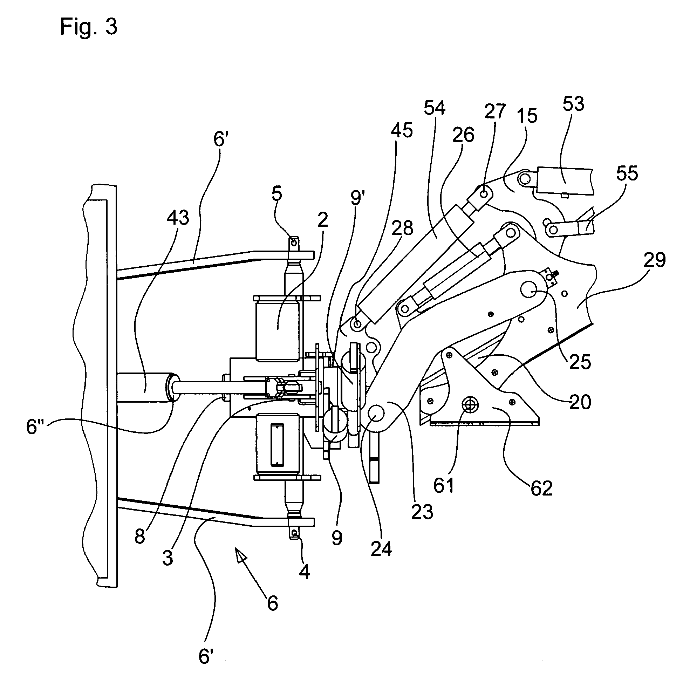

Fig. 3 zeigt eine Draufsicht des Einstellgetriebes 21 und des Drehwerkes 7 in Arbeitsstellung. Endseitig an der Drehachse 8 befindet sich eine Platte 45, die sowohl den Traglenker 23 als auch den Stellzylinder 54 aufnimmt. Der Stellzylinder ist mit dem Bolzen 28 mit der Platte 45 und mit dem Bolzen 27 mit der Schwinge 15 verbunden. Über die Spindel 26, die sowohl an den Traglenker 23 als auch an die Rahmenplatten 29 angreift, wird der Zugpunkt des Drehpfluges 1 eingestellt. Dabei werden sowohl der Traglenker 23 als auch der Stellzylinder 54 gleichzeitig verschwenkt. Der Traglenker 23 ist über den in Arbeitsstellung senkrecht angeordneten Bolzen 24 mit der Drehachse 8 und über den ebenfalls in Arbeitsstellung senkrecht angeordneten Bolzen 25 mit den Rahmenplatten 29 verbunden. Die Rahmenplatten 29 sind mit dem Pflugrahmen 20 verschraubt. Der Pflugrahmen 20 bzw. die Rahmenplatten 29 weisen Lagerungen 61 mit Konsolen 62 auf. Der Einfachheit halber wurden die an der Konsole 62 befestigten Pflugkörper 60 hier nicht dargestellt.

Fig. 4 zeigt eine einfache schematische Darstellung eines Teiles der Vorrichtung 40 mit Drucksteuereinheit 41. Die Drucksteuereinheit 41 weist eine Druckwaage 44 und einen Steuerblock 46 mit 4/3-Wegeventilen bzw. Magnetventilen auf. Der Steuerblock 46 weist eine Eingangsplatte 48 auf mit den Anschlüssen für die Verbindung der Drucksteuereinheit 41 mit dem Load-Sensing-System eines Traktors 50 mit Lastrückmeldung. Über die nicht dargestellte elektronische Regeleinrichtung werden die einzelnen Magnetventile 47, insbesondere 4/3-Wegeventile so geschaltet, dass die Drehzylinder 9 und 9' gesteuert und jeweils in ihrer Totpunktstellung umgeschaltet werden und auch der Hydraulikzylinder 43 wie auch der Stellzylinder 54 für den jeweiligen Betriebszustand optimal eingestellt bzw. mit Öldruck beaufschlagt werden.

Alle genannten Merkmale, auch die den Zeichnungen allein zu entnehmen sind, werden allein und in Kombination als erfindungswesentlich angesehen.

## Patentansprüche

1. Drehpflug (1) mit einem Pflugturm (2) mit Anlenkpunkten (3,4,5) für die Verbindung mit dem Dreipunktgestänge (6) eines Traktors (50), das aus Unterlenkern (6') und einem als Hydraulikzylinder (43) ausgebildeten Oberlenker (6") besteht, mit einem Drehwerk (7) mit Drehachse (8), an die mindestens ein Hydraulikzylinder (9) angreift, und mit einem spornenden Stützrad (30), das im hinteren Bereich (22) des Drehpfluges (1) mit dem Pflugrahmen (20) und über einen torsionssteifen Stabilisator (31) kardanisch mit dem Pflugturm (2) verbunden ist,
**dadurch gekennzeichnet,**
**dass** eine Vorrichtung (40) mit Drucksteuereinheit (41) vorgesehen ist, die so einstellbar ist, dass der Oberlenker (6") auch während der Pflugarbeit mit einer vorwählbaren Zugkraft beaufschlagt ist, wodurch gezielt eine Gewichtsübertragung vom Drehpflug (1) auf den Traktor (50) erfolgt.

2. Drehpflug nach Anspruch 1),
**dadurch gekennzeichnet,**
**dass** die Vorrichtung (40) mit Drucksteuereinheit (41) mit einer Regelelektronik ausgerüstet ist.

3. Drehpflug nach einem der vorhergehenden Ansprüche,
**dadurch gekennzeichnet,**
**dass** die Vorrichtung (40) mit Drucksteuereinheit (41) unabhängig von der Regelhydraulik des Traktors (50) die Zugkraft regelnd ausgelegt ist.

4. Drehpflug nach einem der vorhergehenden Ansprüche,
**dadurch gekennzeichnet,**
**dass** die Vorrichtung (40) mit Drucksteuereinheit (41) einem als Hydraulikzylinder (43) ausgebildeten Oberlenker (6") zugeordnet ist.

5. Drehpflug nach einem der vorhergehenden Ansprüche
**dadurch gekennzeichnet,**
**dass** die Vorrichtung (40) mit Drucksteuereinheit (41) während der Pflugrahmendrehung so schaltbar ausgebildet ist, dass eine Reduzierung der Gewichtsbelastung des Stützrades (30), eine Erhöhung der Gewichtsbelastung auf die Hinterachse (51) des Traktors (50) und eine Erhöhung der Standfestigung des Traktors (650) eintritt.

6. Drehpflug nach einem der vorhergehenden Ansprüche,
**dadurch gekennzeichnet,**
**dass** der Hydraulikzylinder (43) über die Drucksteuereinheit (41) und die Regelelektronik während der Pflugarbeit und der Pflugrahmendrehung permanent mit einem Betriebsdruck beaufschlagt ist, der für den jeweiligen Betriebszustand voreinstellbar ist.

7. Drehpflug nach einem der vorhergehenden Ansprüche,
**dadurch gekennzeichnet,**
**dass** die Drucksteuereinehit (41) eine Druckwaage (44) und einen Steuerblock (46) mit 4/3 Wegeventilen (47) und vorzugsweise einer Eingangsplatte (48) mit Anschlüssen für die Verbindung mit der Regelhydraulik des Traktors (50) aufweist.

8. Verfahren zum Betreiben eines Drehpfluges und eines Traktors,
wobei während des Drehens des Pflugrahmens zusätzlich Gewicht vom Drehpflug auf den Traktor übertragen wird,
**dadurch gekennzeichnet,**
**dass** auch während der Pflugarbeit Gewicht in einer vorgegebenen und variabel den Pflugbedingungen angepassten Höhe vom Drehpflug auf den Traktor übertragen wird.

9. Drehpflug (1) mit einem Pflugturm (2) mit Anlenkpunkten (3,4,5) für die Verbindung mit dem Dreipunktgestänge (6) eines Traktors (50), das aus Unterlenkern (6') und einem Oberlenker (6") besteht, mit einem Drehwerk (7) mit Drehachse (8), an die mindestens ein Hydraulikzylinder (9) angreift, und mit einem spornenden Stützrad (30), das im hinteren Bereich (22) des Drehpfluges (1) mit dem Pflugrahmen (20) und über einen torsionssteifen Stabilisator (31) kardanisch mit dem Pflugturm (2) verbunden ist,
**dadurch gekennzeichnet,**
**dass** eine Vorrichtung (40) mit Hydraulikzylinder und mit Drucksteuereinheit (41) vorgesehen ist, die so einstellbar ist, dass der Oberlenker (6") auch während der Pflugarbeit mit einer vorwählbaren Zugkraft beaufschlagt ist, wodurch gezielt eine Gewichtsübertragung vom Drehpflug (1) auf den Traktor (50) erfolgt.
